# EUROPEAN PATENT APPLICATION

(11) **EP 4 773 714 A1**
(43) Date of publication of application: **08.07.2026**
(21) Application number: 23950153.9
(22) Date of filing: 30.08.2023
(51) Int. Cl.: H04W 74/08, H04W 28/02

(54) **ACCESS METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2023/115949
(87) International publication number: WO 2025/043565

(57) **Abstract**

The present application relates to an access method, a terminal device, a network device, a chip, a processor, a computer-readable storage medium, a computer program product, a computer program, and a communication system. The access method comprises: a terminal device determining an access priority of the terminal device on the basis of device information of the terminal device, wherein the access priority is used for determining related information for access to a network device. By means of the embodiments of the present application, the success rate of a terminal device in terms of sending data can be improved.

## Description

### TECHNICAL FIELD

The present application relates to the field of communications, and more particularly, to an access method, a terminal device, a network device, a chip, a processor, a computer-readable storage medium, a computer program product, a computer program, and a communication system.

### BACKGROUND

Terminal devices compete for resources to achieve uplink transmission through a random access mechanism. This allows a network to provide resources for the terminal devices to perform uplink transmission without knowing data cache and transmission requirements of the terminal devices. Therefore, the random access mechanism can reduce signaling overhead and delay caused by network scheduling. However, random access of a large number of terminal devices may cause collisions. It is necessary to consider how to optimize the access mechanism and improve the success rate of data transmission for the terminal devices.

### SUMMARY

Embodiments of the present application provide an access method, a terminal device, a network device, a chip, a processor, a computer-readable storage medium, a computer program product, a computer program, and a communication system, which can optimize a random access mechanism.

The embodiments of the present application provides an access method, including:
determining, by a terminal device, an access priority of the terminal device based on device information of the terminal device, where the access priority is used to determine relevant information for accessing a network device.

The embodiments of the present application provide an access method, including:
transmitting, by a network device, first trigger information, where the first trigger information is used to trigger a terminal device to access the network device based on an access priority of the terminal device, where the access priority is determined based on device information of the terminal device.

The embodiments of the present application provide a terminal device, including:
a first processing module, configured to determine an access priority of the terminal device based on device information of the terminal device, where the access priority is used to determine relevant information for accessing a network device.

The embodiments of the present application provide a network device, including:
a second communication module, configured to transmit first trigger information, where the first trigger information is used to trigger a terminal device to access the network device based on an access priority of the terminal device, where the access priority is determined based on device information of the terminal device.

The embodiments of the present application provide a terminal device, including: a transceiver, a processor, and a memory. The memory is configured to store a computer program, the transceiver is configured to communicate with other devices, and the processor is configured to invoke the computer program stored in the memory and run the computer program, to enable the terminal device to perform the above-mentioned access method.

The embodiments of the present application provide a network device, including: a transceiver, a processor, and a memory. The memory is configured to store a computer program, the transceiver is configured to communicate with other devices, and the processor is configured to invoke the computer program stored in the memory and run the computer program, to enable the network device to perform the above-mentioned access method.

The embodiments of the present application provide a chip, configured to implement the above-mentioned access method.

Specifically, the chip includes: a processor, configured to invoke a computer program from a memory and run the computer program, to enable a device equipped with the chip to perform the above-mentioned access method.

The embodiments of the present application provide a computer-readable storage medium, configured to store a computer program, where the computer program, when executed by a device, enables the device to perform the above-mentioned access method.

The embodiments of the present application provide a computer program product, including computer program instructions, where the computer program instructions enable a computer to perform the above-mentioned access method.

The embodiments of the present application provide a computer program, where the computer program, when executed on a computer, enables the computer to perform the above-mentioned access method.

The embodiments of the present application provide a communication system, including a terminal device and a network device, configured to perform the above-mentioned access method.

In the embodiments of the present application, the access priority of the terminal device may vary depending on the device information. The terminal device performs access based on its own access priority, thereby improving the success rate of data transmission for the terminal device.

### BRIEF DESCRIPTION OF THE DRAWINGS

FIG. 1 is a schematic diagram of an application scenario according to the embodiments of the present application.
FIG. 2 is a schematic flowchart of an access method according to an embodiment of the present application.
FIG. 3 is a schematic diagram of a method for determining a backoff window in an embodiment of the present application.
FIG. 4 is a schematic diagram of a method for determining a first random number in an embodiment of the present application.
FIG. 5 is a schematic diagram of a resource set in an embodiment of the present application.
FIG. 6 is a schematic flowchart of an access method according to another embodiment of the present application.
FIG. 7 is a schematic block diagram of a terminal device according to an embodiment of the present application.
FIG. 8 is a schematic block diagram of a terminal device according to another embodiment of the present application.
FIG. 9 is a schematic block diagram of a network device according to an embodiment of the present application.
FIG. 10 is a schematic block diagram of a communication device according to the embodiments of the present application.
FIG. 11 is a schematic block diagram of a chip according to the embodiments of the present application.
FIG. 12 is a schematic block diagram of a communication system according to the embodiments of the present application.

### DETAILED DESCRIPTION

Technical solutions in the embodiments of the present application will be described below in conjunction with drawings in the embodiments of the present application.

The technical solutions of the embodiments of the present application may be applied to various communication systems, such as: a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), a wireless local area networks (WLAN), wireless fidelity (WiFi), the 5th-Generation (5G) system, the 6th-Generation (6G) system or other communication systems.

Generally speaking, traditional communication systems support a limited number of connections, which is also easy to implement. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present application may also be applied to these communication systems as well.

In an implementation, the communication system in the embodiments of the present application may be applied to a carrier aggregation (CA) scenario, a dual connectivity (DC) scenario, and may also be applied to a standalone (SA) network deployment scenario.

In an implementation, the communication system in the embodiments of the present application may be applied to an unlicensed spectrum, where the unlicensed spectrum may also be considered as a shared spectrum. Alternatively, the communication system in the embodiments of the present application may be applied to a licensed spectrum, where the licensed spectrum may be considered as an unshared spectrum.

In the embodiments of the present application, each embodiment is described in conjunction with a network device and a terminal device, where the terminal device may be referred to as user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, or may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present application, the terminal device may be deployed on land, including indoor or outdoor, handheld, wearable or vehicle-mounted; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present application, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device is not only a hardware device, but also implements powerful functions by software support as well as data interaction or cloud interaction. Generalized wearable smart devices include devices, that are fully functional, large in size and may implement all or part of functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

In an embodiment of the present application, the network device may be a device used for communicating with a mobile device, and the network device may be an access point (AP) in a WLAN, an evolutional base station (Evolutional Node B, eNB or eNodeB) in an LTE, or a relay station or an access point, or an in-vehicle device, a wearable device, and a network device (gNB) in an NR network, or a network device in a future evolved PLMN network, or a network device in an NTN network, or the like.

As an example but not a limitation, in the embodiments of the present application, the network device may have mobile characteristics. For example, the network device may be a mobile device. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station deployed on land, water, or other places.

In the embodiments of the present application, the network device may provide a service for a cell, and the terminal device communicates with the network device through a transmission resource (e.g., a frequency domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with a high speed.

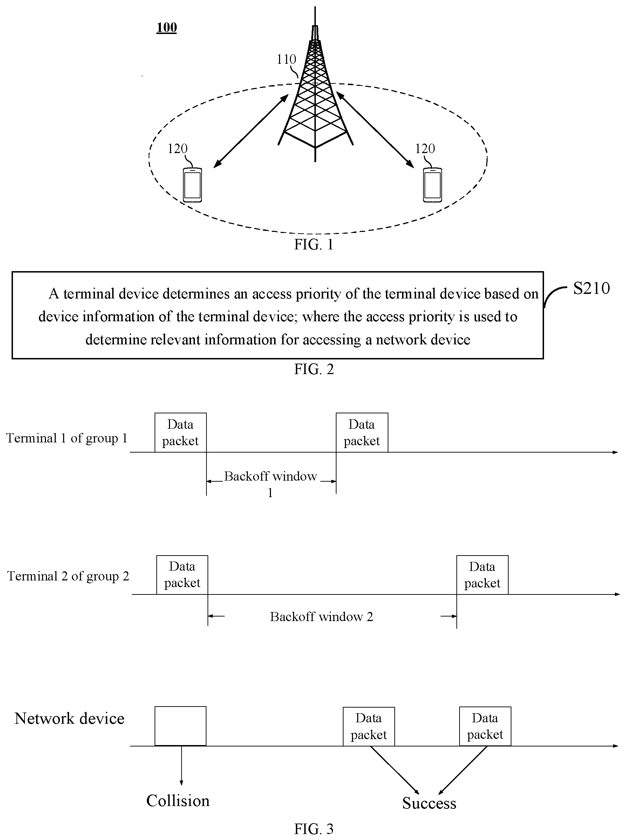

FIG. 1 exemplarily shows a communication system 100. The communication system includes a network device 110 and two terminal devices 120. In an implementation, the communication system 100 may include multiple network devices 110, and the coverage range of each network device 110 may include another number of terminal devices 120, which is not limited in the embodiments of the present application.

In an implementation, the communication system 100 may further include other network entities such as a mobility management entity (MME) and an access and mobility management function (AMF), which is not limited in the embodiments of the present application.

The network device may include an access network device and a core network device. That is, the wireless communication system further includes multiple core networks for communicating with the access network device. The access network device may be an evolutional base station (evolutional node B, which may be referred to as an eNB or e-NodeB briefly), a macro base station, a micro base station (also referred to as a "small base station"), a pico base station, an access point (AP), a transmission point (TP) or a new generation base station (new generation Node B, gNodeB), in a long-term evolution (LTE) system, a next-generation (mobile communication system) (next radio, NR) system or an authorized auxiliary access long-term evolution (LAA-LTE) system, etc.

It should be understood that, in the embodiments of the present application, a device with a communication function in the network/system may be referred to as a communication device. Taking the communication system shown in FIG. 1 as an example, the communication device may include a network device with a communication function and a terminal device with a communication function. The network device and the terminal device may be the specific devices in the embodiments of the present application, which will not be repeated here. The communication device may further include other devices in the communication system, such as a network controller, a mobility management entity, and other network entities, which are not limited in the embodiments of the present application.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exists alone. In addition, a character "/" herein generally indicates that the associated objects before and after this character are in an "or" relationship.

It should be understood that, "indicate/indicated/indicating/indication" mentioned in the embodiments of the present application may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present application, the term "correspond/corresponding/correspondence" may mean that there is a direct correspondence or an indirect correspondence between the two, or may mean that there is an association relationship between the two, or may mean a relationship of indicating and being indicated, or a relationship of configuring and being configured, etc.

To facilitate understanding of the technical solutions of the embodiments of the present application, the related technologies of the embodiments of the present application are described below, and the following related technologies, as optional solutions, may be arbitrarily combined with the technical solutions of the embodiments of the present application, and they all fall within the protection scope of the embodiments of the present application.

### 1. Cellular Passive Internet of Things (IoT)

With the increase in 5G industry applications, there are more and more types of connected objects and application scenarios, and there will be high requirements on the cost and power consumption of communication terminals. The application of passive IoT devices with battery-free and low-cost will become a key technology for cellular IoT, and the types and number of 5G network-connected terminals will be enriched to truly realize Internet of Everything. The passive IoT devices may be based on existing zero-power-consumption technology, and extended on this basis to be suitable for cellular IoT.

### 2. Classification of zero-power terminals

Based on energy sources and usage manners of the zero-power terminals, the zero-power terminals may be classified into the following types.

### (1) Passive zero-power terminal

The zero-power terminal does not need a built-in battery. When a zero-power device approaches a network device, the zero-power device is located within a near-field range formed by radiation of an antenna of the network device, where the network device is, for example, a reader/writer of a radio frequency identification (RFID) system. Therefore, the antenna of the zero-power device generates an induced current through electromagnetic induction, and the induced current drives a low-power chip circuit of the zero-power device. Thus, the signal demodulation of a forward link and the signal modulation of a backward link are realized. For a back scattering link, the zero-power device transmits signals in a back scattering manner.

It can be seen that the passive zero-power device does not need the built-in battery to drive either the forward link or the backward link, and is a truly zero-power device.

The passive zero-power device does not need the battery, and an RF circuit and a baseband circuit are very simple. For example, the passive zero-power device does not need a low-noise amplifier (LNA), a power amplifier (PA), a crystal oscillator, an analog-to-digital converter (ADC), and the like. Therefore, the passive zero-power device has many advantages such as small size, light weight, very low price, and long service life.

The passive zero-power device may also support other energy harvesting manners. By harvesting energy from the environment (e.g., light energy, thermal energy, kinetic energy, mechanical energy), the passive zero-power terminal may obtain energy for driving circuits and support terminal devices to perform communication.

### (2) Semi-passive zero-power device

The semi-passive zero-power device itself is not installed with a conventional battery, but may use a radio frequency (RF) energy harvesting module to harvest radio wave power, or use an energy harvesting module to harvest energy from the environment (e.g., solar energy, thermal energy, mechanical vibration energy); and simultaneously, the semi-passive zero-power device stores the harvested energy in an energy storage unit (e.g., a capacitor). After obtaining energy, the energy storage unit may drive a low-power chip circuit of the zero-power device. Thus, the signal demodulation of a forward link and the signal modulation of a backward link are implemented. For a back scattering link, the zero-power device transmits signals in a back scattering manner.

It can be seen that the semi-passive zero-power device does not need the built-in battery to drive either the forward link or the backward link. Although the energy stored in the capacitor is used during operation, the energy comes from the radio energy harvested by the energy harvesting module. Therefore, the semi-passive zero-power device is also a truly zero-power device.

The semi-passive zero-power device inherits many advantages of the passive zero-power device, and thus the semi-passive zero-power device has many advantages, such as small size, light weight, very low price, and long service life.

### (3) Active zero-power device

Some zero-power devices used in some scenarios may also be active zero-power devices. Such terminals have a built-in battery (e.g., a conventional battery, such as a dry battery, a rechargeable lithium battery). The battery is used to drive a low-power chip circuit of the zero-power device. Thus, the signal demodulation of a forward link and the signal modulation of a backward link are implemented. However, for a back scattering link, the zero-power device transmits signals in a back scattering manner. Therefore, the zero power consumption of such terminals is mainly reflected in the fact that the signal transmission of the backward link does not need the power of the terminal itself, but uses the back scattering manner. Although the active zero-power device uses the battery, the power consumption is very low due to the use of ultra-low power communication technology. Therefore, compared with the existing technologies, the working life of the battery may be significantly extended.

For the active zero-power device, the built-in battery supplies power to the RFID chip, thereby increasing a reading and writing distance of a tag, to improve communication reliability. Therefore, the active zero-power device may be applied in some scenarios with relatively high requirements on a communication distance, a reading latency, etc.

### 3. Device based on ambient energy

In an NR system and a WiFi system, the battery-free and low-cost devices may support low-cost, large-scale deployment and maintenance-free of IoT devices. The current research direction is studying how to support the IoT device based on the ambient energy in the NR system and the WiFi system, and the IoT device based on the ambient energy is referred to as an ambient IoT (A-IoT) device or an ambient powered IoT (AMP IoT) device, and the energy required for its operation comes from ambient energy harvesting. The source of the ambient energy may be a wireless signal, solar energy, thermal energy, etc. This type of device is similar to a passive device or a semi-passive device in the zero-power communication.

The current radio access network (RAN) research broadly categorizes the ambient IoT device into the following three types, each with its own level of complexity and communication capability:
Device A: it does not have an energy storage capability and cannot transmit independent signals, that is, it adopts a transmission manner of back scattering;
Device B: it has an energy storage capability but cannot transmit independent signals, that is, it adopts a transmission manner of back scattering and may utilize stored energy to amplify back scattering signals; and
Device C: it has an energy storage capability and may transmit independent signals, that is, it has an active transmission capability.

Device A has the lowest complexity and power consumption, which may be as low as 1 microwatt (µW), but its communication distance is limited, generally only a few meters. Device A requires a network device to provide carrier signals for back scattering transmission. Device C generally has a large-capacity capacitor to store energy from the environment, and its power consumption may reach several hundred µW, enables active signal transmission and achieves a long communication distance. Since Device C is capable of performing active transmission, it does not require the network device to provide carrier signals. The complexity and power consumption of Device B fall between those of Device A and Device C.

In addition, the zero-power terminal may also support various types of ambient energy harvesting, such as wireless radio frequency, solar energy, thermal energy, mechanical energy, and other energy. The zero-power terminal based on wireless radio frequency energy harvesting may require the network to provide wireless radio frequency power supply signals.

Ambient IoT may be used in at least four scenarios:
object recognition, such as logistics, production line product management, and supply chain management;
environmental monitoring, such as temperature, humidity, and harmful gas monitoring of working environment and natural environment;
positioning, such as indoor positioning, intelligent object search, production line item positioning, and the like; and
intelligent control, such as intelligent control of various electrical appliances in smart homes (turning on and off air conditioners, adjusting temperature), and intelligent control of various facilities in agricultural greenhouses (automatic irrigation and fertilization).

### 4. Collision avoidance algorithm

The radio frequency identification (RFID) technology is a non-contact automatic identification technology that utilizes wireless radio frequency signals for bidirectional data transmission between a reader and an electronic tag (hereinafter referred to as a tag). Multiple tags may transmit data to the reader at the same time, causing signal interference, which is referred to as tag collision. Therefore, a collision avoidance technology is required to solve the signal interference problem, and the algorithm that solves the collision is called the collision avoidance algorithm. Commonly used collision avoidance algorithms are ALOHA algorithm and its improved algorithms.

### (1) Pure ALOHA algorithm

The pure ALOHA algorithm is the simplest random collision avoidance algorithm. In the pure ALOHA algorithm, a tag randomly selects a time point to transmit data. If the tag is not recognized, that is, a collision occurs, the tag will randomly back off for a period of time and independently select a time point to retransmit the data until it succeeds.

### (2) Slot ALOHA algorithm

Based on the pure ALOHA algorithm, the slot ALOHA algorithm is introduced. The slot ALOHA algorithm considers time as a series of continuous segments, each of which is referred to as a slot. Generally, a length of a slot is equal to or slightly longer than data exchange time between an electronic tag and a reader. In the slot ALOHA algorithm, the electronic tag can only transmit data at the beginning of the slot, resulting in either successful transmission or a complete collision, which avoids partial collisions in the pure ALOHA algorithm and halves a collision cycle. Therefore, the system throughput is doubled compared to the pure ALOHA.

### (3) Frame slot ALOHA algorithm

To address the problems in the slot ALOHA algorithm, the frame slot ALOHA algorithm is introduced. A frame refers to a period of time consisting of several slots. The main idea involves introducing a slot counter and a deactivation command for the reader, and a random number generator for the electronic tag.

Assume that each frame contains L number of slots, and the slot counter of the reader counts from 1 to L. The random number generator of the electronic tag is used to generate a random number between 1 and L. An initial value of the slot counter of the reader is 1, and the number of slots is automatically increased by 1 every time a slot length passes. At the beginning of the identification process, the reader transmits a command containing the slot number L to all electronic tags within its coverage range. The random number generator of the electronic tag generates a random number between 1 and L. When the random number is the same as a count value of the slot counter of the reader, the electronic tag transmits data to the reader. After the tag is successfully identified, the reader transmits a deactivation command to it, causing the tag to exit the identification system until the end of the current frame. After a frame is completed, the reader starts a new frame with the number of slots still being L.

However, in the frame slot ALOHA algorithm, if the total number of slots L is much smaller than the number of tags N, it is highly likely that more than one tag will select the same slot, resulting in a collision. If the number of slots L is much larger than the number of tags, it results in a waste of slots. Therefore, the dynamic frame slot ALOHA algorithm is introduced.

### (4) Dynamic frame slot ALOHA algorithm

The dynamic frame slot ALOHA algorithm determines the number of slots in the next frame based on the number of slots in which tags are correctly identified and the number of slots that cause collisions. When the number of electronic tags exceeds the number of slots, causing excessive collisions, a length of the next frame is increased. Otherwise, the length of the next frame is decreased. Optimal throughput is achieved only when the number of slots is commensurate with the number of tags. However, when the number of tags far exceeds the number of slots per frame, the frame length increase is limited by hardware constraints (*Lₘₐₓ*=256). A collision rate of the electronic tag will increase, the time to identify the electronic tag will increase dramatically, and recognition efficiency of the system will decrease dramatically.

### (5) Improved algorithm of dynamic frame slot ALOHA algorithm

Aiming at the problem of limited maximum frame length in the dynamic frame slot ALOHA algorithm, an improved dynamic frame slot ALOHA algorithm is proposed, in which the most typical improvement idea is grouping.

The group-based dynamic frame slot ALOHA algorithm actually borrows the idea of the deterministic collision avoidance algorithm. That is, when the number of tags is greater than the maximum allowable number of slots, some tags are put in a non-responsive state and do not participate in the channel contention. After tags in the responsive state are correctly identified, the reader transmits a deactivation command to them, even if they are in a non-responsive state and do not participate in the channel contention until all tags have been correctly identified.

The group-based dynamic frame slot ALOHA algorithm is as follows.

In S1, the number of tags N within the reader range is estimated based on the dynamic frame slot ALOHA algorithm. If N > 256, the reader transmits a grouping command to the tags, dividing the tags into a standby group and a dormant group, with each group including 256 tags.

In S2, the tags in the standby group participate in an identification process, and the remaining tags are assigned to the dormant group and temporarily do not participate in the identification process.

In S3, after the current frame ends, the tags in the standby group automatically enter dormant state, and the tags in the dormant group automatically change their states to a standby state in sequence.

S2 and S3 are repeated until tags of all groups have been identified, and return to S1.

In some application scenarios of Ambient IoT, a large number of terminal devices will communicate with the network frequently and intensively. For example, in logistics and warehousing scenarios, large quantities of goods need to be transferred, stored, loaded and unloaded, and inventoried in logistics stations or warehouses. With the occurrence of warehouse ordering, goods warehousing, goods management and goods outbound, Ambient IoT needs to communicate with the network intensively and frequently, such as reporting goods information and location information stored in Ambient IoT devices. The concentrated uplink transmission of a large number of Ambient IoT devices in a short period of time may cause collisions. To avoid collisions, the network may adopt scheduling methods to allocate resources used by the Ambient IoT device. However, the uplink transmission requirements of a large number of Ambient IoT devices require significant scheduling delays and signaling overhead from the network. At the same time, the network also needs to be aware of the uplink transmission requirements of the Ambient IoT device, such as a cache state. The latency and overhead resulting from uplink feedback from a large number of Ambient IoT devices are also unacceptable.

Competing for resources through a random access mechanism to achieve uplink transmission may reduce signaling overhead and latency caused by network scheduling. This approach may provide resources for terminals to compete for resources for uplink transmission without the network knowing data cache and transmission requirements of the terminals. However, intensive random access by a large number of Ambient IoT devices in a short period of time may cause the collision. This scenario is similar to the application scenario of RFID, and the method for resolving the collision based on ALOHA algorithm may also be applied. However, the current collision resolution algorithms all aim to ensure that terminals obtain transmission opportunities relatively fairly, rather than improving the success rate of data transmission for each individual terminal.

The technical solutions of the embodiments of the present application are mainly used to solve the above-mentioned technical problems.

FIG. 2 is a schematic flowchart of an access method according to an embodiment of the present application. The method may optionally be applied to the system shown in FIG. 1, but is not limited thereto. The method includes at least part of the following.

In S210, a terminal device determines an access priority of the terminal device based on device information of the terminal device, where the access priority is used to determine relevant information for accessing a network device.

Exemplarily, the terminal device in the embodiments of the present application may be a zero-power terminal, which may include an ambient energy Internet of Things device (Ambient IoT device), and the ambient energy used may include wireless radio frequency energy, solar energy, thermal energy, mechanical energy, etc. From the perspective of energy harvesting, the above-mentioned terminal device may also be an energy harvesting device. The terminal device may be a communication device in a WiFi network or cellular network.

Exemplarily, the network device may be a device in a zero-power Internet of Things or an ambient energy Internet of Things, such as a base station, an access point (AP), and the like. Optionally, for wireless radio frequency power supply, the network device may also be a device that transmits power supply signals.

In the embodiments of the present application, the access of a terminal device to a network device can be understood as the transmission of data by the terminal device to the network device. Exemplarily, the terminal device may access the network device in a random access manner. The random access may be to randomly determine access resources within a certain window or constraint condition, for example, access is performed according to the ALOHA algorithm and its improved algorithms in the aforementioned related embodiments.

In the embodiments of the present application, relevant information of the terminal device accessing the network device (such as parameters and resources of the terminal device accessing the network device) may be determined by the access priority. The access priority is determined based on the device information of the terminal device, and the device information may be inherent information or state information of the terminal device.

That is to say, in the embodiments of the present application, the access priority of the terminal device may vary depending on the device information. Due to different device information, the access capabilities of the terminal devices may be different or the requirements for the success rate of random access may be different. Since different device information corresponds to different access priorities in the embodiments of the present application, corresponding resources may be matched according to the capabilities or requirements of different terminal devices. Based on this, the terminal device performs access based on its own access priority, which may improve the success rate of data transmission for terminal devices.

In some embodiments, the device information includes at least one of: energy-related information, a device type, or a state.

Exemplarily, the energy-related information may include information such as an energy-related capability and a state. In some embodiments, the energy-related information of the terminal device may include at least one of the following information A to E.

### A. Energy storage state

Taking the zero-power terminal as an example, since the energy of the zero-power terminal for operating comes from the environment, it often require a longer energy harvesting time and have a shorter working time. When a collision occurs in the random access resources of the zero-power terminal, the uplink transmission of the zero-power terminal will fail and the zero-power terminal needs to compete for uplink resources again. During this process, due to the limitations of energy storage of the zero-power terminal, the zero-power terminal cannot support long-term resource competition and uplink transmission attempts, ultimately resulting in the inability to complete uplink transmission within a certain period of time. For example, in a logistics environment, goods pass through conveyor belts within a limited time, and information reporting cannot be completed, resulting in missed inspections of goods. Therefore, zero-power terminals with different energy storage states have different requirements for the success rate of random access. The zero-power terminal with less energy storage has a more urgent need to improve the success rate of random access. In some embodiments, a terminal device with a low energy storage state may be set to have a higher access priority.

### B. Energy harvesting capability

Exemplarily, the energy harvesting capability includes one or more information such as the frequency bandwidth, number of frequency bands, and types of frequency bands of wireless radio frequency signals that may be harvested.

For zero-power terminals with different energy harvesting capabilities, the type of ambient energy they harvest and the speed of energy harvesting both affect their operating time. After a collision occurs during random access, the zero-power terminal may harvest energy before successfully acquiring contention resources next time. Due to different energy harvesting capabilities, different zero-power terminals may support different resource contention and the number of uplink transmission attempts. Therefore, zero-power terminals with different energy harvesting capabilities have different requirements for the success rate of random access. The zero-power terminal with poor energy harvesting capability is more urgently in need of improving the success rate of random access. In some embodiments, a higher access priority may be set for the terminal device with lower energy harvesting capability.

### C. Energy storage capability

The zero-power terminal has an energy storage module for operation of the zero-power terminal. Since different zero-power terminals have different size requirements and capability requirements, they may have different energy storage capabilities. For example, a capacitor is used as the energy storage module. The capacitance of the capacitor may be of various types. For example, common capacitors may range from tens to hundreds of µF. For the zero-power terminal with the low energy storage capability, the supported resource contention and the number of uplink transmission attempts are also low, and they have a more urgent need to improve the success rate of random access. In some embodiments, a terminal device with the low energy storage capacity may be set to have a higher access priority.

### D. Strength of a power supply signal

Taking wireless power supply as an example, the strength of the power supply signal received by different zero-power terminals is different. Due to the location of the zero-power terminal, the location of the antenna, and shielding, the strength of the power supply signal received by the zero-power terminal is different. The intensity of the power supply signal will affect the energy harvesting efficiency and the energy storage state. During continuous random access and uplink transmission, a zero-power terminal that receives a weak power supply signal is more likely to experience uplink transmission failure. Therefore, the zero-power terminal that receives the weak power supply signal has a higher requirement for the success rate of random access. In some embodiments, a terminal device with low power supply signal strength may be set to have a higher access priority.

### E. Type of harvested ambient energy

In different scenarios, the efficiency of ambient energy harvesting of zero-power terminals that support different types of ambient energy is different. For example, in outdoor daytime scenarios, the zero-power terminal that supports solar energy has higher energy harvesting efficiency. In indoor scenarios, the zero-power terminal based on wireless radio frequency has higher energy harvesting efficiency. In some special scenarios, the zero-power terminal based on mechanical energy and thermal energy has higher energy harvesting efficiency. Therefore, zero-power terminals supporting different types of ambient energy may have different random access priorities. For example, in outdoor daytime scenarios, an access priority of a zero-power terminal that harvests solar energy may be lower; in indoor scenarios, an access priority of a zero-power terminal that harvests wireless radio frequency energy may be lower, and so on.

In addition to energy-related information, the device information in the embodiments of the present application may further include a device type and/or a state.

Exemplarily, the above-mentioned device type may include a function type and an application type of the terminal device. Specifically, in a network, different types of zero-power terminals may be included. Taking a sensor-type zero-power terminal as an example, a fire monitoring sensor has a high degree of urgency and requires a higher random access priority. Other environmental monitoring sensors, such as humidity sensors and pressure sensors, have lower urgency and may have lower random access priorities. For example, a zero-power terminal operating in a high-speed mobile environment (such as a sensor used on a high-speed train) requires a higher random access priority to complete uplink transmission as quickly as possible owing to its limited time within network coverage. A zero-power terminal operating in a stationary state (such as a sensor used for environmental monitoring) may have a lower random access priority.

Exemplarily, the above-mentioned state may include various working states of the terminal device, for example, the state includes speed. For example, the access priority of the terminal device is higher in a high-speed state, and lower in a low-speed state.

In some embodiments, the above-mentioned step S210, in which the terminal device determines the access priority of the terminal device based on the device information of the terminal device, may include: the terminal device determines the access priority of the terminal device based on the device information of the terminal device and a first corresponding relationship, where the first corresponding relationship is used to determine the access priority corresponding to the device information.

Exemplarily, the first corresponding relationship may include a corresponding relationship between different device information and different access priorities. For example, the first corresponding relationship may include: an energy storage state less than 20% corresponds to an access priority 1, an energy storage state 20%-50% corresponds to an access priority 2, an energy storage state 50%-80% corresponds to an access priority 3, and an energy storage state greater than 80% corresponds to an access priority 4, where an priority order of access priorities 1 to 4 is from high to low.

According to the above embodiments, the terminal device may autonomously determine the access priority based on the device information according to the pre-configured first corresponding relationship, thereby determining the resource-related information for accessing the network device without the need for scheduling by the network device, which avoids the scheduling delay and signaling overhead.

In some embodiments, the above-mentioned access method further includes: the terminal device determines, based on the access priority, a first parameter for accessing the network device, where the first parameter is related to a time domain resource contention window of the terminal device.

The above-mentioned time domain resource contention window may refer to a time domain resource window based on which the terminal device randomly competes for resources to access the network device. It can be understood that in some scenarios, the time domain resource contention window may correspond to a time domain position (e.g., a size of a backoff window in the ALOHA algorithm corresponds to a time domain position for re-accessing the network after backing off due to a collision). Therefore, in some embodiments, the terminal device determines, based on the access priority, the first parameter related to the time domain resource contention window for accessing the network device. It can also be understood that the terminal device determines, based on the access priority, the first parameter related to the time domain position for accessing the network device.

In some embodiments, the first parameter may include a value range of the time domain resource contention window and/or a length of the time domain resource contention window.

Specifically, the terminal device may determine the value range of the time domain resource contention window based on the access priority, that is, determine a maximum value and/or minimum value that a size of the window may take. For example, in a case where the access priority of the terminal device is high, the value range of the size of the time domain resource contention window is determined to be 1 to L, that is, the maximum value is L; in a case where the access priority is low, the value range of the size of the time domain resource contention window is determined to be 1 to N, that is, the maximum value is N.

Alternatively, the terminal device may determine a length of the value range of the time domain resource contention window based on the access priority. For example, in a case where the access priority of the terminal device is high, the size of the time domain resource contention window may be determined to be within a range of a length L; in a case where the access priority is low, the size of the time domain resource contention window may be determined to be within a range of a length L/2.

Alternatively, the terminal device may determine a length of the value range of the time domain resource contention window based on the access priority, and determine a minimum value and/or maximum value of the size of the window. For example, in a case where the access priority of the terminal device is high, the size of the time domain resource contention window may be determined to be within the range of the length L, and the minimum value is 1, that is, a value of the size of the time domain resource contention window is within 1 to L; in a case where the access priority is low, the size of the time domain resource contention window may be determined to be within the range of the length L/2, and the minimum value is L/2, that is, the value of the size of the time domain resource contention window is within (L/2) to L.

Exemplarily, the time domain resource contention window includes: a backoff window of the terminal device in a case where a transmission collision occurs, and/or a first random number. The first random number is used by the terminal device to determine a time domain position for accessing the network device.

Specifically, the time domain resource contention window includes a backoff window of the terminal device in a case where a transmission collision occurs. The backoff window refers to a period of time randomly determined by the terminal device to back off when a collision occurs during random access of multiple terminal devices. For example, in the ALOHA algorithm and its improved algorithms in the aforementioned related technologies, the terminal device randomly backs off for a period of time. Optionally, the terminal device may determine a value range of the backoff window based on the access priority, and then randomly determine a size of the backoff window within the value range, so as to implement random backoff.

Alternatively, the time domain resource contention window includes a first random number, or in other words, the time domain resource contention window corresponds to the first random number. The first random number is used to determine a slot for the terminal device to access the network device, for example, the first random number is a random number determined by the terminal device within the range of the number of slots included in each frame in the frame slot ALOHA algorithm, the dynamic frame slot ALOHA algorithm and its improved algorithms in the aforementioned related technologies. Optionally, the terminal device may determine a value range of the first random number based on the access priority, and then randomly determine the first random number within the value range, and access the network device when a slot count value is the same as the first random number.

The terminal device may determine the first parameter in various ways. Two exemplary implementations are provided below.

Manner 1: the terminal device determines, based on the access priority, the first parameter for accessing the network device, including: the terminal device determines a group to which the terminal device belongs based on the priority; the terminal device determines the first parameter based on the group.

Exemplarily, in order to distinguish different access priorities, in an access mechanism, such as a random access mechanism based on the ALOHA algorithm or its improved algorithms, zero-power terminals performing random access may be classified into different groups. Different groups correspond to different random access priorities. Therefore, the zero-power terminal may determine the group to which it belongs based on the access priority corresponding to its own device information. Value ranges of the contention window (backoff window) corresponding to different groups are different.

Specifically, in order to ensure as much as possible that data packets of zero-power terminals in a group with the high random access priority do not collide, a value range of the time domain resource contention window (such as the backoff window) corresponding to the group with the high random access priority can be made different from a value range of the time domain resource contention window corresponding to a group with the low random access priority, so that the data packets of the group with the high random access priority do not collide with the data packets of the group with the low random access priority.

Manner 2: the terminal device determines, based on the access priority, the first parameter for accessing the network device, including: the terminal device determines the first parameter based on the access priority of the terminal device and a second corresponding relationship, where the second corresponding relationship includes a corresponding relationship between the access priority and the first parameter.

Exemplarily, the second corresponding relationship may include a corresponding relationship between different access priorities and different first parameters.

Exemplarily, the second corresponding relationship is determined according to a preset rule or determined according to network configuration information. For example, an energy storage state less than 20%, an energy storage state 20%-50%, an energy storage state 50%-80% and an energy storage state above 80% may correspond to different first parameters respectively, so that zero-power terminals in different energy storage states may use different domain resource contention windows for random access.

The following describes the technical details of determining the first parameter for different types of contention windows.

In some embodiments, in a case where the access priority of the terminal device is higher than a first access priority, a maximum value of a size of a backoff window of the terminal device in a case where a transmission collision occurs is less than or equal to a minimum value of a size of a backoff window corresponding to the first access priority.

Specifically, the time domain resource contention window includes the backoff window, and sizes of the backoff window corresponding to different access priorities have different value ranges. If the access priority is high, the size of the backoff window may be randomly selected within a value range with smaller numerical values. If the access level is low, the size of the backoff window may be randomly selected within a value range with larger numerical values.

For example, a backoff window corresponding to the group with the high random access priority has a value range of 0 to N, and a backoff window corresponding to the group with the low random access priority has a value range of (N+1) to L.

As shown in FIG. 3, a terminal 1 in a group 1 and a terminal 2 in a group 2 initially select the same time domain resource to transmit a data packet, resulting in a collision. Afterwards, the terminal 1 and the terminal 2 randomly select backoff windows to transmit the data packet again. Since the terminal 1 has a higher access priority, it may choose within a smaller value range and thus select a shorter backoff window, which gives it a greater chance of successfully competing for resources than the terminal 2. The minimum value of a size of a backoff window selected by the terminal 2 in a group 2 may be greater than or equal to the maximum value of a size of a backoff window selected by the terminal in a group 1. Therefore, no terminals in the group 2 will compete for resources in a backoff window 1.

In some embodiments, in a case where the access priority of the terminal device is higher than a second access priority, a maximum value in a value range of a first random number corresponding to the terminal device is less than or equal to a minimum value in a value range of a first random number corresponding to the second access priority.

Specifically, the time domain resource contention window includes the first random number, and the value range of the first random number corresponding to different access priorities is different. If the access priority is high, the size of the first random number may be randomly selected within a smaller value range. If the access level is low, the size of the first random number may be randomly selected within a larger value range.

In the frame slot ALOHA algorithm and its improved algorithms, the smaller the first random number generated is, the higher the priority will be in starting to compete for time domain resources to transmit the data packet. For example, assuming that an initial value of the slot counter of the network device is 1, the number of slots is automatically increased by 1 every time a slot length passes, the value range of the first random number of the zero-power terminal with the high access priority may be 1 to L/2, that is, the zero-power terminal with the high access priority may randomly generate a random number between 1 and L/2; and the value range of the zero-power terminal with the low access priority may be (L/2+1) to L, that is, the zero-power terminal with the low access priority may randomly generate a random number between (L/2+1) to L. When the random number is the same as the count value of the slot counter of the network device, the zero-power terminal uses the slot to transmit data to the network device.

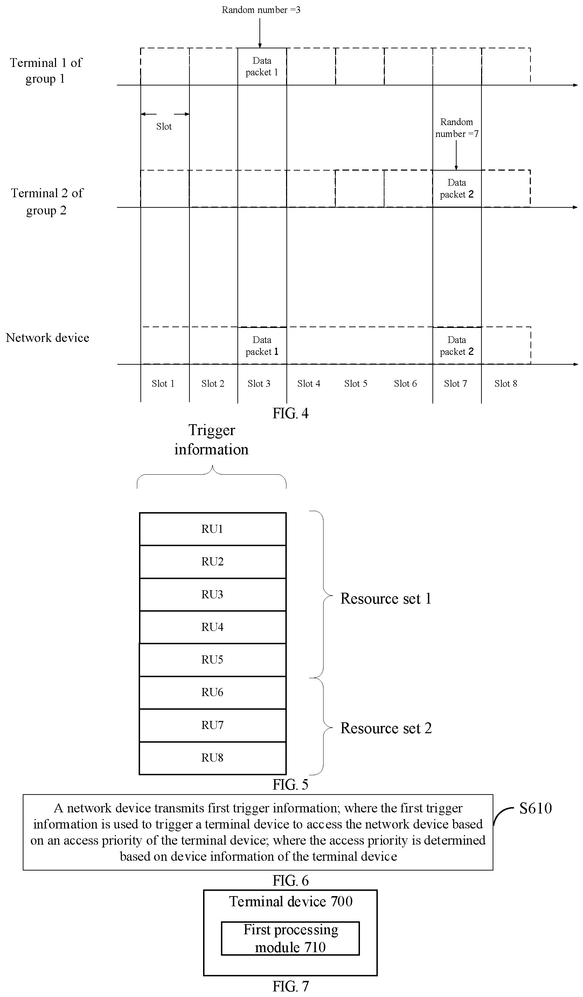

As shown in FIG. 4, an access priority corresponding to a group 1 is higher than an access priority corresponding to a group 2. The network device transmits a resource containing 8 slots, and counts from 1. A terminal 1 in the group 1 may randomly select within a range of 1 to 4, and a terminal 2 in the group 2 may select within a range of 5 to 8. One possible scenario is that the terminal 1 in the group 1 and the terminal 2 in the group 2 generate random numbers 3 and 7, respectively. It can be seen that according to the above embodiments, the terminal 1 may compete for resources earlier than the terminal 2 and has the priority of accessing the network device.

In some embodiments, in a case where the access priority of the terminal device is higher than a third access priority, a length of a value range of a first random number corresponding to the terminal device is greater than a length of a value range of a first random number corresponding to the third access priority.

Specifically, by setting the length of the range for random number generation to be relatively longer, the zero-power terminal in the group with the high random access priority may have more opportunities to compete for resources.

For example, the zero-power terminal with the high access priority may randomly generate a random number from the range of 1 to L, and the zero-power terminal with the low random access priority may randomly generate a random number from the range of L/2 to L. Then, the zero-power terminal with the high access priority may be randomly distributed over all L slots, while the zero-power terminal with the low random access priority can only be randomly distributed over L/2 slots.

For another example, the zero-power terminal with the high access priority may randomly generate a random number from the range of 1 to N, while the zero-power terminal with the low random access priority may randomly generate a random number from the range of (N+1) to L, where N is greater than L/2. Then, the zero-power terminal with the high access priority may be randomly distributed over all N slots, while the zero-power terminal with the low access priority can only be randomly distributed over (L-N) slots. Since N is greater than L/2, the zero-power terminal with the high access priority has more available slots and thus has a greater success rate of data transmission.

It can be seen that in the above embodiments, the terminal device determines the parameters of random access based on the access priority, so that terminal devices with different device information may have different access priorities, and have different opportunities to compete for resources according to different access priorities, thereby improving the success rate of overall data transmission for terminal devices.

In some embodiments, the above-mentioned access method may further include: the terminal device determines, based on the access priority, a resource set for the terminal device to access the network device from a plurality of resource sets configured by the network device.

That is to say, in addition to improving the success rate of data packet transmission for terminal devices with the high random access priority through different contention windows, it is also possible to reduce collisions and improve the success rate of data packet transmission for zero-power terminals with the high random access priority by configuring terminal devices with different access priorities to compete for resources in different resource sets.

Specifically, the network device may configure different resource sets corresponding to different access priorities, and the terminal device may determine the resource set that it may use from the multiple resource sets based on its own access priority.

In the embodiments of the present application, one resource set may include at least one resource unit (RU). Optionally, the resource set of the terminal device with the high access priority may include more RUs. That is to say, in a case where the access priority of the terminal device is higher than a fourth access priority, the number of RUs in the resource set available to the terminal device is greater than the number of RUs in the resource set corresponding to the fourth access priority. In this way, terminal devices with the high access priority have a lower collision probability and a higher success rate of data packet transmission.

As shown in FIG. 5, the network device indicates multiple resource sets through trigger information, where a resource set 1 includes RU1 to RU5 and a resource set 2 includes RU6 to RU8. The zero-power terminal with the high access priority randomly selects an RU in the resource set 1 to transmit a data packet, and the zero-power terminal with the low access priority randomly selects an RU in the resource set 2 to transmit a data packet.

In some embodiments, each RU in the resource set is determined based on at least one of: frequency domain information, time domain information, or code domain information. In other words, the RUs may be divided based on frequency domain resources, time domain resources, or code domain resources, or may be divided in multiple resource domains.

Exemplarily, the frequency domain resources may be frequency domain bandwidths or channels. For example, different RUs are on different channels. For example, in China, the 920-925 MHz frequency band includes 20 channels with a bandwidth of 250 kHz.

In practical applications, terminal devices may perform random access based on the existing ALOHA algorithm. When a terminal device selects resources, it may transmit a data packet by selecting resources from a resource set corresponding to its own access priority, so that terminal devices with different random access priorities may have different collision probabilities and success rates of data packet transmission.

FIG. 6 is a schematic flowchart of an access method according to another embodiment of the present application. This method may optionally be applied to the system shown in FIG. 1, but is not limited thereto. The method includes at least part of the following.

In S310, a network device transmits first trigger information, where the first trigger information is used to trigger a terminal device to access the network device based on an access priority of the terminal device, where the access priority is determined based on device information of the terminal device.

Accordingly, in some embodiments, for the terminal device, the above access method may further include: the terminal device receives the first trigger information, where the first trigger information is used to trigger the terminal device to access the network device.

According to the above embodiments, the terminal device accesses the network based on the triggering of the network device. In this way, the network device may carry some indication information in the first trigger information, so that the terminal device may determine the access priority based on its own device information, and thus access the network device based on the access priority, thereby improving the success rate of data transmission.

Optionally, the first trigger information may be transmitted from the network device in a broadcast, multicast or unicast manner.

Exemplarily, the network device may broadcast the first trigger information, so that each terminal device within the coverage of the network device may randomly access the network device. For example, in a logistics scenario, goods information is reported during the circulation process based on the triggering of the network device. Specifically, when the goods pass through the coverage of a network device, the information is reported based on the triggering of the network device; when the goods pass through the coverage of the next network device, the information is reported again based on the triggering of the next network device. In this way, the collection of logistics information for goods in circulation can be achieved.

In some embodiments, the above-mentioned access method may further include: the terminal device transmits a data packet to the network device based on the access priority and the first trigger information; the terminal device confirms that the terminal device has accessed the network device in a case where acknowledge (ACK) information for the data packet transmitted from the network device is received.

Accordingly, in some embodiments, for the network device, the above access method may further include: the network device transmits ACK information for a data packet to the terminal device in a case where the network device receives the data packet transmitted from the terminal device, where the ACK information is used by the terminal device to confirm that the terminal device has accessed the network device.

According to the above embodiments, after successfully receiving the data packet transmitted from the terminal device, the network device may feedback ACK information, so that the terminal device confirms that it has accessed the network device, thereby improving reliability of communication. In some scenarios, the terminal device may also determine whether it needs to re-access the network device. For example, in a case where the terminal device does not receive the ACK information within a period of time after transmitting the data packet, it may re-access the network device.

In some embodiments, the first trigger information includes at least one of the following information F to H.

### F. Identification information

The identification information is used by the terminal device to determine whether to access the network device. Optionally, the identification information may be used by the terminal device to determine whether to re-access the network device after successfully accessing the network device.

Exemplarily, the identification information may be used to distinguish the network device.

Specifically, the network device may transmit trigger information including the same identification within a period of time, so that all terminal devices passing through the coverage of the network device within this time range may access the network device. For example, in a logistics scenario, all goods passing through the network device report information to the network device. That is, the above access method further includes: the network device transmits third trigger information within a first time range, where the third trigger information and the first trigger information include the same identification information.

For the terminal device, after the terminal device determines that it has successfully accessed the network device, if it receives trigger information including the same identification information, it may be confirmed that the network device corresponding to the trigger information has been accessed and there is no need to re-access. Specifically, the above access method may further include: the terminal device does not perform re-access in a case where the terminal device receives second trigger information after accessing the network device, and identification information in the second trigger information is the same as identification information in the first trigger information.

Optionally, the above access method may further include: the terminal device accesses the network device based on second trigger information in a case where the terminal device receives the second trigger information after accessing the network device, and identification information in the second trigger information is different from identification information in the first trigger information.

Specifically, when the terminal device enters the coverage of other network devices, it receives the second trigger information transmitted from the other network devices. The identification information in the second trigger information may be used by the terminal device to identify that it is a different network device, so that the terminal device may re-access and transmit the data packet. For example, in a logistics scenario, goods information is reported during the circulation process through triggering of network devices. Due to occurrence of the collision, the information of some goods was not successfully reported. The network device may transmit trigger information including the same identification information multiple times, so that the goods that have been reported successfully will no longer be reported, while the goods that have not been reported successfully will continue to be reported. When the goods pass through the next network device, since trigger information including identification information different from the previous identification information is received, random access and information reporting are performed again, thereby achieving information reporting when the goods pass through each network device.

Optionally, the terminal device does not perform re-access in a case where the terminal device receives second trigger information within a first time range after accessing the network device, and identification information in the second trigger information is the same as identification information in the first trigger information. That is, in a case where the terminal device receives the trigger information including the same identification information again within a certain time range, it will no longer perform random access and data packet transmission. Correspondingly, the terminal device may perform re-access and data packet transmission in a case where the trigger information including the same identification information is received again outside the first time range. For example, a network device periodically triggers a terminal device to report information, and transmits trigger information which carries the same identification information multiple times within the same period (within the first time range), and the trigger information transmitted within different periods carry different identification information. In this way, the terminal device may achieve periodic information reporting based on the identification information.

G. Resource set information, where the resource set information is used to indicate a resource set that is corresponding to the access priority and configured by the network device.

It can be understood that, the resource set information may be resource configuration information. Exemplarily, the resource set information may include multiple resource sets configured by the network device, and the multiple resource sets correspond to different access priorities. In this way, the terminal device determines an available resource set in multiple resource sets based on the access priority.

H. First indication information, where the first indication information is used to indicate a first parameter for accessing the network device corresponding to the access priority of the terminal device, and/or the resource set corresponding to the access priority of the terminal device.

Optionally, the first indication information may be used to indicate the first corresponding relationship (the corresponding relationship between the device information and the access priority) and/or the second corresponding relationship (the corresponding relationship between the access priority and the first parameter) in the aforementioned embodiments. In this way, the terminal device may determine the corresponding first parameter based on the first indication information and its own device information. Alternatively, the first indication information may be used to indicate the corresponding relationship between multiple resource sets configured by the network device and multiple priorities. In this way, the terminal device may determine the available resource set based on the first indication information and its own device information.

It can be seen that, the embodiments of the present application propose an access method for achieving different access priorities. The terminal device determines access parameters or resource sets based on device information such as an energy state and a type, so that zero-power terminals of different energy states and types may have different random access priorities, ensuring the success rate of data transmission for the zero-power terminals.

FIG. 7 is a schematic block diagram of a terminal device 700 according to an embodiment of the present application. The terminal device 700 may include:
a first processing module 710, configured to determine an access priority of the terminal device based on device information of the terminal device, where the access priority is used to determine relevant information for accessing a network device.

In an implementation, the device information includes at least one of: energy-related information, a device type, or a state.

In an implementation, the energy-related information of the terminal device includes at least one of:
an energy storage state;
an energy harvesting capability;
an energy storage capability;
strength of a power supply signal; or
a type of harvested ambient energy.

In an implementation, the state includes speed.

In an implementation, the first processing module 710 is further configured to:
determine the access priority of the terminal device based on the device information of the terminal device and a first corresponding relationship, where the first corresponding relationship is used to determine the access priority corresponding to the device information.

In an implementation, the first processing module 710 is further configured to:
determine, based on the access priority, a first parameter for accessing the network device, where the first parameter is related to a time domain resource contention window of the terminal device.

In an implementation, the first parameter includes a value range of the time domain resource contention window and/or a length of the time domain resource contention window.

In an implementation, the time domain resource contention window includes:
a backoff window in a case where a transmission collision occurs, and/or a first random number, where the first random number is used to determine a time domain position for accessing network device.

In an implementation, the first processing module 710 is further configured to:
determine a group to which the terminal device belongs based on the priority; and
determine the first parameter based on the group.

In an implementation, the first processing module 710 is further configured to:
determine the first parameter based on the access priority of the terminal device and a second corresponding relationship, where the second corresponding relationship includes a corresponding relationship between the access priority and the first parameter.

In an implementation, in a case where the access priority of the terminal device is higher than a first access priority, a maximum value of a size of a backoff window of the terminal device in a case where a transmission collision occurs is less than or equal to a minimum value of a size of a backoff window corresponding to the first access priority.

In an implementation, in a case where the access priority of the terminal device is higher than a second access priority, a maximum value in a value range of a first random number corresponding to the terminal device is less than or equal to a minimum value in a value range of a first random number corresponding to the second access priority.

In an implementation, in a case where the access priority of the terminal device is higher than a third access priority, a length of a value range of a first random number corresponding to the terminal device is greater than a length of a value range of a first random number corresponding to the third access priority.

In an implementation, the first processing module 710 is further configured to:
determine, based on the access priority, a resource set for accessing the network device from a plurality of resource sets configured by the network device.

In an implementation, each resource unit in the resource set is determined based on at least one of: frequency domain information, time domain information, or code domain information.

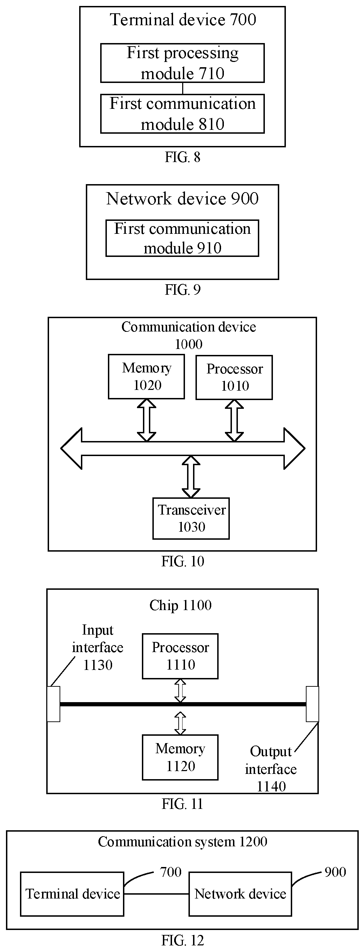

In an implementation, as shown in FIG. 8, the terminal device 700 further includes a first communication module 810, which is configured to:
receive first trigger information, where the first trigger information is used to trigger access to the network device.

In an implementation, the first trigger information includes at least one of:
identification information, where the identification information is used to determine whether to access the network device;
resource set information, where the resource set information is used to indicate a resource set that is corresponding to the access priority and configured by the network device; or
first indication information, where the first indication information is used to indicate a first parameter for accessing the network device corresponding to the access priority of the terminal device, and/or the resource set corresponding to the access priority of the terminal device.

In an implementation, the first communication module 810 is further configured to transmit a data packet to the network device based on the access priority and the first trigger information; and
the first processing module 710 is further configured to confirm that the network device has been accessed in a case where acknowledge information for the data packet transmitted from the network device is received.

In an implementation, the first communication module 810 is further configured to:
access the network device based on second trigger information in a case where second trigger information is received after accessing the network device, and identification information in the second trigger information is different from identification information in the first trigger information.

In an implementation, the first communication module 810 is further configured to:
not perform re-access in a case where second trigger information is received after accessing the network device, and identification information in the second trigger information is the same as identification information in the first trigger information.

The terminal device 700 in the embodiments of the present application may implement the corresponding functions of the terminal device in the aforementioned method embodiments. For procedures, functions, implementations and beneficial effects corresponding to various modules (e.g., sub-modules, units or components) in the terminal device 700, the corresponding description in the above method embodiments may be referred to and will not be repeated here. It should be noted that the functions described with respect to the various modules (e.g., sub-modules, units or components) in the terminal device 700 in the embodiments of the present application may be implemented by different modules (e.g., sub-modules, units or components) or implemented by a same module (e.g., sub-module, unit or component).

FIG. 9 is a schematic block diagram of a network device 900 according to an embodiment of the present application. The network device 900 may include:
a second communication module 910, configured to transmit first trigger information, where the first trigger information is used to trigger a terminal device to access the network device based on an access priority of the terminal device, where the access priority is determined based on device information of the terminal device.

In an implementation, the first trigger information includes at least one of:
identification information, where the identification information is used by the terminal device to determine whether to access the network device;
resource set information, where the resource set information is used to indicate a resource set that is corresponding to the access priority and configured by the network device; or
first indication information, where the first indication information is used to indicate a first parameter for accessing the network device corresponding to the access priority of the terminal device, and/or the resource set corresponding to the access priority of the terminal device.

In an implementation, the second communication module 910 is further configured to:
transmit acknowledge information for a data packet to the terminal device in a case where the data packet transmitted from the terminal device is received, where the acknowledge information is used by the terminal device to confirm that the terminal device has accessed the network device.

In an implementation, the second communication module 910 is further configured to:
transmit third trigger information within a first time range, where the third trigger information and the first trigger information include the same identification information.

The network device 900 in the embodiments of the present application may implement the corresponding functions of the network device in the aforementioned method embodiments. For procedures, functions, implementations and beneficial effects corresponding to various modules (e.g., sub-modules, units or components) in the network device 900, the corresponding description in the above method embodiments may be referred to and will not be repeated here. It should be noted that the functions described with respect to the various modules (e.g., sub-modules, units or components) in the network device 900 in the embodiments of the present application may be implemented by different modules (e.g., sub-modules, units or components) or implemented by a same module (e.g., sub-module, unit or component).

FIG. 10 is a schematic structural diagram of a communication device 1000 according to the embodiments of the present application. The communication device 1000 includes a processor 1010. The processor 1010 may invoke a computer program from a memory and run the computer program, to enable the communication device 1000 to implement the method in the embodiments of the present application.

In an implementation, the communication device 1000 may further include a memory 1020. The processor 1010 may invoke a computer program from the memory 1020 and run the computer program, to enable the communication device 1000 to implement the method in the embodiments of the present application.

The memory 1020 may be a separate device independent of the processor 1010, or may be integrated into the processor 1010.

In an implementation, the communication device 1000 may further include a transceiver 1030, and the processor 1010 may control the transceiver 1030 to communicate with other devices, and specifically, the processor 1010 may transmit information or data to other devices, or receive information or data transmitted from other devices.

The transceiver 1030 may include a transmitter and a receiver. The transceiver 1030 may further include an antenna, and the number of antennas may be one or more.

In an implementation, the communication device 1000 may be the network device of the embodiments of the present application, and the communication device 1000 may implement the corresponding procedures implemented by the network device in various methods of the embodiments of the present application, which will not be repeated here for the sake of brevity.

In an implementation, the communication device 1000 may be the terminal device of the embodiments of the present application, and the communication device 1000 may implement the corresponding procedures implemented by the terminal device in various methods of the embodiments of the present application, which will not be repeated here for the sake of brevity.

FIG. 11 is a schematic structural diagram of a chip 1100 according to the embodiments of the present application. The chip 1100 includes a processor 1110, and the processor 1110 may invoke a computer program from a memory and run the computer program, to implement the method in the embodiments of the present application.

In an implementation, the chip 1100 may further include a memory 1120. The processor 1110 may invoke a computer program from the memory 1120 and run the computer program, to implement the method performed by the terminal device or the network device in the embodiments of the present application.

The memory 1120 may be a separate device independent of the processor 1110, or may be integrated into the processor 1110.

In an implementation, the chip 1100 may further include an input interface 1130. The processor 1110 may control the input interface 1130 to communicate with other devices or chips, and specifically, the processor 1110 may acquire information or data transmitted from other devices or chips.

In an implementation, the chip 1100 may further include an output interface 1140. The processor 1110 may control the output interface 1140 to communicate with other devices or chips, and specifically, the processor 1110 may output information or data to other devices or chips.

In an implementation, the chip may be applied to the network device in the embodiments of the present application, and the chip may implement the corresponding procedures implemented by the network device in various methods of the embodiments of the present application, which will not be repeated here for the sake of brevity.

In an implementation, the chip may be applied to the terminal device in the embodiments of the present application, and the chip may implement the corresponding procedures implemented by the terminal device in various methods of the embodiments of the present application, which will not be repeated here for the sake of brevity.

The chips applied in the network device and the terminal device may be the same chip or different chips.

It should be understood that the chip mentioned in the embodiments of the present application may also be called a system-level chip, a system chip, a chip system or a system-on-chip chip, etc.

The above-mentioned processor may be a general-purpose processor, a digital signal processor (DSP), a field programmable gate array (FPGA), an application specific integrated circuit (ASIC) or other programmable logic devices, transistor logic devices, and discrete hardware components, etc. The above-mentioned general-purpose processor may be a microprocessor or may be any conventional processor, etc.

The above-mentioned memory may be a volatile memory or a non-volatile memory, or may include both the volatile memory and non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above-mentioned memory is exemplary but not a limited illustration. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM) and a direct rambus random access memory (direct rambus RAM, DR RAM), etc. That is, the memory in the embodiments of the present application is intended to include but is not limited to these and any other suitable types of memories.

FIG. 12 is a schematic block diagram of a communication system 1200 according to the embodiments of the present application. The communication system 1200 includes a terminal device 700 and a network device 900.

The terminal device 700 determines an access priority of the terminal device 700 based on device information of the terminal device 700, where the access priority is used to determine relevant information for accessing the network device 900.

The network device 900 transmits first trigger information, where the first trigger information is used to trigger the terminal device 700 to access the network device 900 based on the access priority of the terminal device 700, where the access priority is determined based on the device information of the terminal device 700.

The terminal device 700 may be configured to implement the corresponding functions implemented by the terminal device in the above method, and the network device 900 may be configured to implement the corresponding functions implemented by the network device in the above method, which will not be repeated here for the sake of brevity.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present application are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (e.g., coaxial cable, optical fiber, digital subscriber line (DSL)) or wireless (e.g., infrared, wireless, microwave) means. The computer-readable storage medium may be any available medium that can be accessed by the computer, or a data storage device, such as including a server or a data center that integrates one or more available media. The available medium may be a magnetic medium (e.g., a floppy disk, a hard disk, a magnetic tape), an optical medium (e.g., a digital video disk (DVD)), or a semiconductor medium (e.g., a solid state disk (SSD)), etc.

It should be understood that, in the various embodiments of the present application, a size of serial numbers of the above processes does not imply an order of execution, and the execution order of the respective processes should be determined by their function and internal logic, but should not constitute any limitation on the implementation processes of the embodiments of the present application.

Those skilled in the art will clearly understand that, for the convenience and brevity of the description, for the specific working processes of the systems, apparatuses and units described above, the corresponding processes in the above method embodiments may be referred to and will not be repeated here.

The foregoing is only the specific implementation of the present application. However, the protection scope of the present application is not limited thereto. Any variations or replacements apparent to those skilled in the art within the technical scope disclosed by the present application shall fall within the protection scope of the present disclosure. Therefore, the protection scope of the disclosure shall be subject to the protection scope of the claims.

## Claims

1. An access method, comprising:
determining, by a terminal device, an access priority of the terminal device based on device information of the terminal device, wherein the access priority is used to determine relevant information for accessing a network device.

2. The method according to claim 1, wherein the device information comprises at least one of: energy-related information, a device type, or a state.

3. The method according to claim 2, wherein the energy-related information of the terminal device comprises at least one of:
an energy storage state;
an energy harvesting capability;
an energy storage capability;
strength of a power supply signal; or
a type of harvested ambient energy.

4. The method according to claim 2 or 3, wherein the state comprises speed.

5. The method according to any one of claims 1 to 4, wherein determining, by the terminal device, the access priority of the terminal device based on the device information of the terminal device comprises:
determining, by the terminal device, the access priority of the terminal device based on the device information of the terminal device and a first corresponding relationship, wherein the first corresponding relationship is used to determine the access priority corresponding to the device information.

6. The method according to any one of claims 1 to 5, further comprising:
determining, by the terminal device, based on the access priority, a first parameter for accessing the network device, wherein the first parameter is related to a time domain resource contention window of the terminal device.

7. The method according to claim 6, wherein the first parameter comprises a value range of the time domain resource contention window and/or a length of the time domain resource contention window.

8. The method according to claim 6 or 7, wherein the time domain resource contention window comprises:
a backoff window of the terminal device in a case where a transmission collision occurs, and/or a first random number, wherein the first random number is used by the terminal device to determine a time domain position for accessing the network device.

9. The method according to any one of claims 6 to 8, wherein determining, by the terminal device, based on the access priority, the first parameter for accessing the network device comprises:
determining, by the terminal device, a group to which the terminal device belongs based on the priority; and
determining, by the terminal device, the first parameter based on the group.

10. The method according to any one of claims 6 to 8, wherein determining, by the terminal device, based on the access priority, the first parameter for accessing the network device comprises:
determining, by the terminal device, the first parameter based on the access priority of the terminal device and a second corresponding relationship, wherein the second corresponding relationship comprises a corresponding relationship between the access priority and the first parameter.

11. The method according to any one of claims 6 to 10, wherein in a case where the access priority of the terminal device is higher than a first access priority, a maximum value of a size of a backoff window of the terminal device in a case where a transmission collision occurs is less than or equal to a minimum value of a size of a backoff window corresponding to the first access priority.

12. The method according to any one of claims 6 to 11, wherein in a case where the access priority of the terminal device is higher than a second access priority, a maximum value in a value range of a first random number corresponding to the terminal device is less than or equal to a minimum value in a value range of a first random number corresponding to the second access priority.

13. The method according to any one of claims 6 to 12, wherein in a case where the access priority of the terminal device is higher than a third access priority, a length of a value range of a first random number corresponding to the terminal device is greater than a length of a value range of a first random number corresponding to the third access priority.

14. The method according to any one of claims 1 to 13, further comprising:
determining, by the terminal device, based on the access priority, a resource set for the terminal device to access the network device from a plurality of resource sets configured by the network device.

15. The method according to claim 14, wherein each resource unit in the resource set is determined based on at least one of: frequency domain information, time domain information, or code domain information.

16. The method according to any one of claims 1 to 15, further comprising:
receiving, by the terminal device, first trigger information, wherein the first trigger information is used to trigger the terminal device to access the network device.

17. The method according to claim 16, wherein the first trigger information comprises at least one of:
identification information, wherein the identification information is used by the terminal device to determine whether to access the network device;
resource set information, wherein the resource set information is used to indicate a resource set that is corresponding to the access priority and configured by the network device; or
first indication information, wherein the first indication information is used to indicate a first parameter for accessing the network device corresponding to the access priority of the terminal device, and/or the resource set corresponding to the access priority of the terminal device.

18. The method according to claim 16 or 17, further comprising:
transmitting, by the terminal device, a data packet to the network device based on the access priority and the first trigger information; and
confirming, by the terminal device, that the terminal device has accessed the network device in a case where acknowledge information for the data packet transmitted from the network device is received.

19. The method according to claim 18, further comprising:
accessing, by the terminal device, the network device based on second trigger information in a case where the terminal device receives the second trigger information after accessing the network device, and identification information in the second trigger information is different from identification information in the first trigger information.

20. The method according to claim 18 or 19, further comprising:
not performing, by the terminal device, re-access in a case where the terminal device receives second trigger information after accessing the network device, and identification information in the second trigger information is the same as identification information in the first trigger information.

21. An access method, comprising:
transmitting, by a network device, first trigger information, wherein the first trigger information is used to trigger a terminal device to access the network device based on an access priority of the terminal device, wherein the access priority is determined based on device information of the terminal device.

22. The method according to claim 21, wherein the first trigger information comprises at least one of:
identification information, wherein the identification information is used by the terminal device to determine whether to access the network device;
resource set information, wherein the resource set information is used to indicate a resource set that is corresponding to the access priority and configured by the network device; or
first indication information, wherein the first indication information is used to indicate a first parameter for accessing the network device corresponding to the access priority of the terminal device, and/or the resource set corresponding to the access priority of the terminal device.

23. The method according to claim 22, further comprising:
transmitting, by the network device, acknowledge information for a data packet to the terminal device in a case where the network device receives the data packet transmitted from the terminal device, wherein the acknowledge information is used by the terminal device to confirm that the terminal device has accessed the network device.

24. The method according to any one of claims 21 to 23, further comprising:
transmitting, by the network device, third trigger information within a first time range, wherein the third trigger information and the first trigger information comprise the same identification information.

25. A terminal device, comprising:
a first processing module, configured to determine an access priority of the terminal device based on device information of the terminal device, wherein the access priority is used to determine relevant information for accessing a network device.

26. The terminal device according to claim 1, wherein the device information comprises at least one of: energy-related information, a device type, or a state.

27. The terminal device according to claim 2, wherein the energy-related information of the terminal device comprises at least one of:
an energy storage state;
an energy harvesting capability;
an energy storage capability;
strength of a power supply signal; or
a type of harvested ambient energy.

28. The terminal device according to claim 26 or 27, wherein the state comprises speed.

29. The terminal device according to any one of claims 25 to 28, wherein the first processing module is further configured to:
determine the access priority of the terminal device based on the device information of the terminal device and a first corresponding relationship, wherein the first corresponding relationship is used to determine the access priority corresponding to the device information.

30. The terminal device according to any one of claims 25 to 29, wherein the first processing module is further configured to:
determine, based on the access priority, a first parameter for accessing the network device, wherein the first parameter is related to a time domain resource contention window of the terminal device.

31. The terminal device according to claim 30, wherein the first parameter comprises a value range of the time domain resource contention window and/or a length of the time domain resource contention window.

32. The terminal device according to claim 30 or 31, wherein the time domain resource contention window comprises:
a backoff window in a case where a transmission collision occurs, and/or a first random number, wherein the first random number is used to determine a time domain position for accessing the network device.

33. The terminal device according to any one of claims 30 to 32, wherein the first processing module is further configured to:
determine a group to which the terminal device belongs based on the priority; and
determine the first parameter based on the group.

34. The terminal device according to any one of claims 30 to 32, wherein the first processing module is further configured to:
determine the first parameter based on the access priority of the terminal device and a second corresponding relationship, wherein the second corresponding relationship comprises a corresponding relationship between the access priority and the first parameter.

35. The terminal device according to any one of claims 30 to 34, wherein in a case where the access priority of the terminal device is higher than a first access priority, a maximum value of a size of a backoff window of the terminal device in a case where a transmission collision occurs is less than or equal to a minimum value of a size of a backoff window corresponding to the first access priority.

36. The terminal device according to any one of claims 30 to 35, wherein in a case where the access priority of the terminal device is higher than a second access priority, a maximum value in a value range of a first random number corresponding to the terminal device is less than or equal to a minimum value in a value range of a first random number corresponding to the second access priority.

37. The terminal device according to any one of claims 30 to 36, wherein in a case where the access priority of the terminal device is higher than a third access priority, a length of a value range of a first random number corresponding to the terminal device is greater than a length of a value range of a first random number corresponding to the third access priority.

38. The terminal device according to any one of claims 25 to 37, wherein the first processing module is further configured to:
determine, based on the access priority, a resource set for accessing the network device from a plurality of resource sets configured by the network device.

39. The terminal device according to claim 38, wherein each resource unit in the resource set is determined based on at least one of: frequency domain information, time domain information or code domain information.

40. The terminal device according to any one of claims 25 to 39, wherein the terminal device further comprises a first communication module, wherein the first communication module is configured to:
receive first trigger information, wherein the first trigger information is used to trigger access to the network device.

41. The terminal device according to claim 40, wherein the first trigger information comprises at least one of:
identification information, wherein the identification information is used to determine whether to access the network device;
resource set information, wherein the resource set information is used to indicate a resource set that is corresponding to the access priority and configured by the network device; or
first indication information, wherein the first indication information is used to indicate a first parameter for accessing the network device corresponding to the access priority of the terminal device, and/or the resource set corresponding to the access priority of the terminal device.

42. The terminal device according to claim 40 or 41, wherein
the first communication module is further configured to transmit a data packet to the network device based on the access priority and the first trigger information; and
the first processing module is further configured to confirm that the network device has been accessed in a case where acknowledge information for the data packet transmitted from the network device is received.

43. The terminal device according to claim 42, wherein the first communication module is further configured to:
access the network device based on second trigger information in a case where second trigger information is received after accessing the network device, and identification information in the second trigger information is different from identification information in the first trigger information.

44. The terminal device according to claim 42 or 43, wherein the first communication module is further configured to:
not perform re-access in a case where second trigger information is received after accessing the network device, and identification information in the second trigger information is the same as identification information in the first trigger information.

45. A network device, comprising:
a second communication module, configured to transmit first trigger information, wherein the first trigger information is used to trigger a terminal device to access the network device based on an access priority of the terminal device, wherein the access priority is determined based on device information of the terminal device.

46. The network device according to claim 45, wherein the first trigger information comprises at least one of:
identification information, wherein the identification information is used by the terminal device to determine whether to access the network device;
resource set information, wherein the resource set information is used to indicate a resource set that is corresponding to the access priority and configured by the network device; or
first indication information, wherein the first indication information is used to indicate a first parameter for accessing the network device corresponding to the access priority of the terminal device, and/or the resource set corresponding to the access priority of the terminal device.

47. The network device according to claim 46, wherein the second communication module is further configured to:
transmit acknowledge information for a data packet to the terminal device in a case where the data packet transmitted from the terminal device is received, wherein the acknowledge information is used by the terminal device to confirm that the terminal device has accessed the network device.

48. The network device according to any one of claims 45 to 47, wherein the second communication module is further configured to:
transmit third trigger information within a first time range, wherein the third trigger information and the first trigger information comprise the same identification information.

49. A terminal device, comprising: a transceiver, a processor and a memory, wherein the memory is configured to store a computer program, the transceiver is configured to communicate with other devices, and the processor is configured to invoke the computer program stored in the memory and run the computer program, to enable the terminal device to perform the method according to any one of claims 1 to 20.

50. A network device, comprising: a transceiver, a processor and a memory, wherein the memory is configured to store a computer program, the transceiver is configured to communicate with other devices, and the processor is configured to invoke the computer program stored in the memory and run the computer program, to enable the network device to perform the method according to any one of claims 21 to 24.

51. A chip, comprising: a processor, configured to invoke a computer program from a memory and run the computer program, to enable a device equipped with the chip to perform the method according to any one of claims 1 to 20.

52. A chip, comprising: a processor, configured to invoke a computer program from a memory and run the computer program, to enable a device equipped with the chip to perform the method according to any one of claims 21 to 24.

53. A computer-readable storage medium, configured to store a computer program, wherein the computer program, when executed by a device, enables the device to perform the method according to any one of claims 1 to 20.

54. A computer-readable storage medium, configured to store a computer program, wherein the computer program, when executed by a device, enables the device to perform the method according to any one of claims 21 to 24.

55. A computer program product, comprising computer program instructions, wherein the computer program instructions enable a computer to perform the method according to any one of claims 1 to 20.

56. A computer program product, comprising computer program instructions, wherein the computer program instructions enable a computer to perform the method according to any one of claims 21 to 24.

57. A computer program, wherein the computer program enables a computer to perform the method according to any one of claims 1 to 20.

58. A computer program, wherein the computer program enables a computer to perform the method according to any one of claims 21 to 24.

59. A communication system, comprising:
a terminal device, configured to perform the method according to any one of claims 1 to 20; and
a network device, configured to perform the method according to any one of claims 21 to 24.
